Europäisches Patentamt

(19) European Patent Office

Office européen des brevets

(11) **EP 0 771 151 B1**

(12) **EUROPEAN PATENT SPECIFICATION**

(45) Date of publication and mention
of the grant of the patent:
**09.09.1998 Bulletin 1998/37**

(21) Application number: **95924334.6**

(22) Date of filing: **29.06.1995**

(51) Int. Cl.$^6$: **A23L 1/24**, A23L 1/39,
A23L 1/05

(86) International application number:
**PCT/EP95/02534**

(87) International publication number:
**WO 96/02151 (01.02.1996 Gazette 1996/06)**

(54) **POURABLE SALAD DRESSING**

FLIESSFÄHIGE SALATSAUCE

SAUCE SALADE FLUIDE

(84) Designated Contracting States:
**AT BE CH DE DK ES FR GB GR IE IT LI NL PT SE**

(30) Priority: **15.07.1994 EP 94305185**
**24.10.1994 US 328180**

(43) Date of publication of application:
**07.05.1997 Bulletin 1997/19**

(73) Proprietors:
• **UNILEVER N.V.**
**3013 AL Rotterdam (NL)**
Designated Contracting States:
**BE CH DE DK ES FR GR IT LI NL PT SE AT**
• **UNILEVER PLC**
**London EC4P 4BQ (GB)**
Designated Contracting States:
**GB IE**

(72) Inventors:
• **BROWN, Charles Rupert Telford**
**Bedford MK40 3PS (GB)**
• **DANIELS, Stephen Charles**
**Great Addington Northants NN14 4BL (GB)**

• **JONES, Malcolm Glyn**
**Bedford MK43 7QG (GB)**
• **NORTON, Ian Timothy**
**Rushden NN10 0ES (GB)**
• **RUBOW, Richard Edward**
**Ridgefield Park, NJ 07660 (US)**
• **KOCHAKJI, Daniel Joseph**
**West Milford, NJ 07480 (US)**
• **BUCHANAN, Michele Alice**
**Montgomery, NJ 12549 (US)**

(74) Representative:
**Sikken, Antonius H. J. M. et al**
**UNILEVER N.V.,**
**Patent Division,**
**P.O. Box 137**
**3130 AC Vlaardingen (NL)**

(56) References cited:
**EP-A- 0 432 835**     **EP-A- 0 441 495**
**EP-A- 0 463 688**     **EP-A- 0 547 647**
**EP-A- 0 558 113**     **WO-A-91/19423**
**WO-A-93/17582**

## Description

The present invention is concerned with pourable products, in particular with pourable acidic food products of the dressing type, and especially pourable salad dressings of low viscosity which nevertheless possess particles suspending properties.

## BACKGROUND OF THE INVENTION

Many attempts have been made to formulate good quality salad dressings. In particular there is a need for pourable products with good appearance and physical characteristics at all fat levels from 50 wt% down to zero fat products. Two-phase pourable dressings (up to 50 wt% of fat) have aqueous phases which normally do not suspend pieces of herbs, vegetables and spices. Current storage-stable low/zero fat dressings commonly employ xanthan to keep pieces of herbs, vegetables and spices suspended. But the xanthan presence results in a viscosity which is undesirably increased over home-made non storage-stable products or full fat products. Storage-stable means that the pieces of vegetables, herbs and/or spices remain suspended for at least four weeks. Use of xanthan results moreover in poor surface coating properties and in a slimy mouthfeel. Therefore the drastic reduction, and most preferably the removal of xanthan from pourable salad dressings is much desired.

EP 558 113 contains a description of a general process for water continuous compositions including salad dressings which contain polysaccharides present as microgels obtained by applying shear during gel formation.

## STATEMENT OF INVENTION

Pourable storage-stable salad dressings have been found which, surprisingly, in the absence of effective amounts of xanthan, have the ability to keep pieces of herbs, vegetables and/or spices suspended for a prolonged period of time. This suspension effect is attained at a viscosity which is even lower than the minimum viscosity necessary for imparting pieces suspending properties to the current xanthan based oil and vinegar dressings.

According to a first aspect of the invention a pourable acidic dressing is provided comprising

a. 0-50 wt% of fat,
b. 46-99 wt% of water,
c. pieces of vegetables, herbs and/or spices of a visible size,
d. an acidulant, enough for a titratable acidity of 0.5-2.5%,
e. 0.1-4 wt% of one or more non-starch polysaccharides present in a sheared gel form,
which polysaccharides used either singly or in combination, if applied under quiescent gelling conditions, at the concentration used in the dressing composition, and at the appropriate pH, titratable acidity and salt content, are capable to form in water either

(A) a rigid thermoreversible gel; or
(B) a rigid chemically set gel; or
(C) a rigid synergistic gel.
The final dressing has a Brookfield viscosity of 100-4,500 cps. (centipoise) and a yield stress (tan delta = 1) of 0.1-10 Pa.

"Quiescent gelling conditions" means that the gel is allowed to form in the absence of shear.

It has been found further that such dressings can be obtained if the dressing composition contains specific polysaccharide gels and the dressing be prepared under shear conditions which cause disruption of the normal polysaccharide network formation.

Therefore, according to a second aspect of the invention a process is provided for preparing a pourable salad dressing having the above-mentioned composition and rheology which process comprises the steps of

a. dispersing the polysaccharides in water to obtain a pre-mix, optionally adding one or more other ingredients, including the pieces of herbs, vegetables and spices to the dressing composition;
b. applying shear during the formation of the gel;
c. adding the remaining ingredients of the dressing to the sheared gel dispersion;
such that the final dressing has
a Brookfield viscosity of 100-4,500 cps. and
a yield stress (tan delta = 1) of 0.1-10 Pa.

The dressings of the invention have improved rheology, stability, surface coating properties and mouthfeel when compared with the traditional oil and vinegar dressings and the dressings of the prior art containing effective amounts of xanthan gum.

## DETAILS OF THE INVENTION

The dressing contains pieces of vegetables, herbs and/or spices of a visible size. Visibility has to be understood in that the pieces as such can be distinguished by the naked eye. This means that at least 80 wt.% of the particles has a size in the range of 0.5-5 mm. Such pieces when initially dispersed in a dressing normally settle at the bottom of the container after some hours. Visibility does not mean that pieces are visible under all circumstances. E.g. in an opaque dressing only the particles at the surface of the dressing are visible. Dressings of the invention preferably have a Brookfield viscosity in the range 200 to 2000 cps., more preferably 200 to 1000 cps.. These are proper low viscosities for a pourable dressing.

Brookfield viscosity is a common viscosity parameter and is determined by taking the viscosity after shearing for 1 minute at 10 rpm using a Brookfield DV-I+™ viscometer fitted with the RV spindle set.

Dressings of the invention preferably have a yield stress (tan delta = 1) in the range 0.2-5 Pa, more preferably 0.2-2 Pa. This yield stress ensures good particle suspending ability. It is determined by performing an oscillatory stress ramp using a Carrimed CSL™ 500 rheometer and standard geometries, and determining the stress value at which the tangent of the delta function becomes unity (tan delta = 1). This method enables comparison of different materials at the same deformation state.

The determination of viscosity and yield stress is made at a temperature of normal product usage, generally being 5-35°C but typically 18-25°C.

In preparing the dressings of the invention shear is applied during gel formation resulting into microgel particles. For obtaining the desired rheology the proper shear conditions can be found by common variations known to the man skilled in the art. Generally a relatively high shear is used.

Shear can be applied by various means employing e.g. a homogeniser, high shear mixer, votator or scraped surface heat exchanger. There must be sufficient clearance to allow substantial passage of particulates, having a size up to about 5 mm. This sufficient clearance is gained by using a scraped surface heat exchanger, with properly sized rotors, to allow for a 5 mm minimum annular spacing for the product. Larger spacing may allow larger particulate integrity. Smaller spacing will not allow homogeneous distribution of of particulates, and destroys particulate integrity. Suitably a Contherm™ model 6x3a scraped surface heat exchanger is operated at a product temperature of 5°C, at a throughput of 1.5 to 4.0 kg/minute and having a tip speed of 1.5 to 10 m/s., preferably 2.0 m/s. When using other shear devices, in order to obtain a product with the desired rheology and surface coating properties the skilled person is able to determine appropriate shear conditions which are at least equivalent to the shear conditions of the Contherm™.

All dressing ingredients may be added in the pre-mix before shearing starts ("all-in-one-process"). But in order to prevent possible particle disruption, the herb, vegetable and spice pieces are preferably added after formation of the gel dispersion.

According to a preferred embodiment the dressing premix is subjected to a pasteurisation treatment before shearing.

The gels which may be employed for the invention are selected from the group consisting of thermoreversible gels, chemically set gels and synergistic gels.

For the purpose of the invention the term thermoreversible gels refers to polysaccharide gels which melt upon heating and which re-take their gel structure upon cooling.

Examples of thermoreversible gels of polysaccharides are disclosed in EP 355 908.

Non-starch polysaccharides preferred for this purpose are agar, iota-carrageenan, kappa-carrageenan and furcellaran. The preferred concentration is 0.5-2.0 wt% and more preferably 0.7-1.5 wt%, except for agar where the level is preferably 0.2-2.0 wt% and more preferably 0.4-1.1 wt%. The gelation temperature of thermoreversible gels preferably is 0-85°C, more preferably 20-50°C.

For the purpose of the present invention the term chemically set gels refers to polysaccharide gels which do not reversibly melt upon increasing the temperature. They derive their gel structure from a chemical interaction of the polysaccharide with appropriate ions, e.g. $Ca^{2+}$ ions. Examples of chemically set gels of polysaccharides are disclosed in EP 432 835.

A suitable non-starch polysaccharide preferred for this purpose is sodium/calcium alginate, where the degree of alginate conversion to calcium alginate preferably is >10%, more preferably 20-100%, most preferably 70-90%. For the calcium dependency of the alginate gel strength, see Food Gels, pp. 53-78, (Ed. P. Harris), 1990, Elsevier ISBN 1-85166-441-9.

Another chemically set gel is low-methoxy (DE 5-50) pectin with a R value in the range 0.3-1.0 (where R is defined as twice the calcium concentration divided by the concentration of free pectinate groups). The desired R-value is attained by adding an appropriate amount of $CaCl_2.2H_2O$-solution to the pectin solution.

These chemically set gels are preferably used at a level of 0.3-2.0 wt%, more preferably 0.6-1.5 wt%, most preferably 0.7-1.1 wt%.

Preferred cations for effecting the gelation are $Ca^{2+}$ and $K^+$, which are used in such amount that the above conversion degree or R value is attained. Normally, suitable concentrations are found in the range 0.01-1.0 wt%.

Synergistic gels are described in, for example, Edwin R. Morris, Mixed Polymer Gels, Food Gels, Elsevier Applied Science (1990), 291-352. For the purpose of the invention synergistic gels are understood to comprise all mixtures of two or more polymers, at least one of these being a non-starch polysaccharide, that may individually be non-gelling, but which will form gels (or gels of higher modulus) on mixing.

Examples of combinations of polysaccharides which are capable of forming synergistic gels are

sodium alginate / pectin,
agar / konjac mannan,
carrageenan / konjac mannan,
propylene glycol alginate (PGA) / pectin,
agar / locust bean gum and
kappa-carrageenan / locust bean gum.

A gel chosen from the group consisting of agar, calcium pectin, calcium alginate, sodium alginate / pectin, kappa-carrageenan and iota-carrageenan is preferred for use in the dressings of the present invention.

More preferred is the synergistic alginate / pectin gel with a weight % preferably being 0.2 - 0.9, more preferably 0.3 - 0.8, most preferably 0.4 - 0.7.

Especially preferred is the synergistic sodium alginate / high-methoxy pectin gel. The sodium alginate preferably has high guluronic acid content. The hydroxyl groups of the high methoxy pectin have been methylated preferably at a level of more than 50%, more preferably greater than 55%, most preferably 60-80%.

The alginate : pectin ratios preferably are 30:70 to 90:10, more preferably 40:60 to 80:20, most preferably 50:50 to 70:30.

The combined weight percentage of alginate and pectin is preferably 0.50-4.0 wt%, more preferably 0.70-3.0 wt%, most preferably 0.90-2.0 wt%.

The dressing composition based on alginate / pectin is acidified according to the requirements of titratable acidity (given later) but limited by the need for a (product) pH <4.0, more preferably <3.85, most preferably 3.2-3.8.

These synergistic gels are made preferably in the substantial absence of $Ca^{2+}$ cations so that no chemically set gels are formed. Preferably, when synergistic gels are made, the level of $Ca^{2+}$ is 0-0.01 wt% and more preferably 0-0.001 wt%. The most preferred compositions of the invention are substantially free from $Ca^{2+}$. By reducing the level of calcium ions the taste of the dressing is improved.

The water used for preparing the dressing preferably is free from calcium, e.g. by employing deionized or demineralized water.

Although preferably the compositions of the invention are substantially free from xanthan, it is well known to use small amounts of xanthan gum to minimize water separation and these small amounts may be used provided they have not the deleterious effect on rheology mentioned above. Therefore some xanthan is allowed at a level of 0 - 0.1 wt%, preferably 0 - 0.01 wt%.

Dressings are essentially food compositions with an acid taste. An acidulant is incorporated for imparting the desired taste and flavour and for microbiological preservation. Suitable acidifiers comprise acetic acid, lactic acid, citric acid and phosphoric acid. Vinegar and acetic acid are preferred dressing acidulants. The optimum amount of acidulant is established by sensory evaluation and microbiological stability. It is known that a sensory appreciation has no good correspondence with the pH of the dressing, because ingredients such as proteins may interfere with the acidity perception. A better parameter for measuring acidity is the so-called Titratable Acidity (TA). The titratable acidity is the amount (g) of titratable acid on the total amount (g) of dressing * 100%. The titratable acidity is 0.5-2.5%, preferably 0.9-1.8% and more preferably 1.1-1.4%. A way of measuring titratable acidity is included below with the examples.

Compositions of the invention may comprise 0-50 wt% of fat. More preferably the level of fat is 0-15 wt%, most preferred are fat levels 0-10 wt%, including substantially fat-free dressings and dressings having a fat content of only 0.5-8 wt%. However, the invention also enables the production of 30% fat dressings such as full fat Italian dressings.

Throughout this specification the terms oil and fat are used interchangeably. Also indigestible fats such as sucrose polyesters may be used.

Fats for use in the dressings of the invention preferably are liquid at room temperature. Preferably their SAFA content is ≤ 15 wt%. Traditional salad dressing oils or other suitable naturally occurring oils or mixtures thereof may be used, for example olive oil, linseed oil (about 10 wt% SAFA), rapeseed oil (about 9 wt% SAFA), safflower oil (about 9 wt% SAFA), sesame oil (about 9 wt% SAFA). Also oils obtained from (genetically) modified sources may be chosen. It is also possible to obtain low SAFA oils by fractionation and/or modification of naturally occurring oils. An example of a very low SAFA oil and its method of preparing is disclosed in EP 326 198.

The invention also enables the preparation of a storage-stable dressing which allows an oil phase as a separate layer in addition to an aqueous phase containing suspended pieces. On shaking, both phases form an emulsion with a viscosity and surface coating properties similar to traditional oil and vinegar dressings without xanthan. Droplets of oil phase in shaken dressings of the invention remain substantially dispersed for at least one hour. This is superior over traditional dressings and over xanthan containing dressings with the same viscosity. Traditional dressings refer to home-made and non storage-stable dressings.

According to a preferred embodiment, the fat is present in an stable emulsified form, comprising small fat globules, having a volume weighted mean diameter of less than 20 microns, more preferably 0.1-5 microns, most preferably 0.5-2 microns.

The compositions of the invention contain water at a level of 46-99 wt%, preferably 60-95 wt%.

If desired, compositions of the invention may contain, in addition to the above mentioned preferred gels, other gelling or thickening agents.

Examples of such materials are non-gelling hydrolysed starch, amylose, denatured whey protein, denatured soy protein, locust bean gum, guar gum, gum arabic and microcrystalline cellulose. Preferably, the total level of these additional gelling and/or thickening ingredients is 0-10 wt%, more preferably 0-5 wt%, most preferably 0-0.5 wt%. However, for taste reasons, dressings are substantially free from these ingredients.

According to a further embodiment, a sheared gel with the composition of the invented dressing may be diluted either with water or with the aqueous phase composition in order to adjust the finished product parameters so that these fit in the claimed ranges.

Optional ingredients of the dressing of the invention further include flavours, salts, preservatives, vitamins and colouring materials, to be added in the usual amounts. Suitable concentrations are: salt (e.g. sodium chloride) 0-4 wt%, preservatives (preferably potassium sorbate and sodium benzoate) 0-4 wt%, colouring material (e.g. beta-carotene) 0-1 wt%.

The low/zero fat pourable dressing of the present invention possesses several advantageous properties. The dressing contains pieces of vegetables, herbs and/or spices of a visible size. Although substantially free from xanthan, the dressings consistency allows to keep the pieces suspended for at least four weeks. Moreover, the dressing has good rheological and surface coating properties. The slimy mouthfeel of xanthan based dressings is substantially reduced or even eliminated.

The invented dressing also displays an increased emulsion stability if oil is present and, moreover, better surface coating behaviour when poured onto salad.

The invented dressing forms a suitable base for the manufacture of e.g. "Italian", "French" or vinaigrette type dressings.

The invention will be further illustrated by means of the following examples:

**Titratable acidity (TA)**

The titratable acidity is the amount (g) of titratable acid on the total amount (g) of dressing * 100%. It is established as follows:

Disperse a sample of 5-10 g salad dressing containing e.g. acetic acid as acidulant in 100 ml of distilled water and stir. Titrate with 0.1 N sodium hydroxide (bracket the meter for pH 8.1 using a two-point standardization technique and standardize with a pH 7.00 buffer) until pH 8.1 after 30 seconds of stabilisation (A ml). Do the same for distilled water instead of salad dressing (B ml). The TA (%) = [(C * (A-B) * 0.1 / exact sample weight)] * 100% . C * 1000 = relative molecular mass of the acid divided by the number of the dissociated acid groups in the molecule (for e.g. acetic acid C = 0.060). Ref.: Vogel, Textbook for Quantitative Inorganic Analysis.

**Examples 1-5**

For the nature and the amount of the ingredients see Table I.

A dispersion of the gelling agent in cold water is heated to 85-90°C. Sodium chloride, potassium sorbate and sodium benzoate are added and subsequently the liquid flavour components and the vinegar.

The mixture is processed by conducting it through a scraped surface heat exchanger while cooling to a final temperature below 10°C and applying shear so that the gel when formed has a lower modulus than a corresponding gel when formed under quiescent conditions, yet retaining a yield stress. Pieces of herbs, spices and/or vegetables are added after shearing. The yield stress of the gel system enables keeping suspended these pieces.

**Example 6**

Example 6 is carried out as described in the previous paragraph. The processed aqueous part of the dressing is distributed into the container and then - on top of this part - oil in the appropriate ratio is added.

**Example 7**

Example 3 was repeated but the herb/spice/vegetable pieces were added before the shearing step together with the other ingredients.

**Comparison examples A, B and C**
for xanthan containing dressings

For the nature and the amount of the ingredients see Table I.
Xanthan is dispersed in cold water. Then sodium chloride, potassium sorbate, sodium benzoate and sucrose are dissolved and finally the flavour blend, including particulates such as herbs, vegetables and spices, and the vinegar are added and the mixture is stirred until homogeneous.
The oil part in example C is added as described in ex. 6.

**RESULTS**

Table II shows that all dressings of the invention have good particle suspending properties. The surface coating capability as well as pouring and mouthfeel (particularly absence of slimyness) are satisfactory. Even when the vegetable etc. pieces are added before shearing, in the obtained dressings the pieces remain suspended during at least four weeks. The traditional compositions refer to home-made, non storage-stable dressing compositions.

Table I

| INGREDIENTS | Example Compositions. | | | | | | | | | |
|---|---|---|---|---|---|---|---|---|---|---|
| | Example Number | | | | | | | | | |
| ATTRIBUTES | $A^1$ | $B^1$ | $C^2$ | 1 | 2 | 3 | 4 | 5 | 6 | 7 |
| xanthan gum | 0.55 | 0.25 | 0.18 | - | - | - | - | - | - | - |
| agar | - | - | - | 1.00 | 0.40 | - | - | 0.80 | 0.28 | - |
| HM pectin[2] | - | - | - | - | - | 0.80 | 0.40 | - | - | 0.80 |
| Na alginate | - | - | - | - | - | 1.20 | 0.60 | - | - | 1.20 |
| sucrose | 4.00 | 4.00 | - | 4.00 | 4.00 | 4.00 | 4.00 | 4.00 | 4.00 | 4.00 |
| sodium chloride | 2.02 | 2.02 | 4.79 | 2.02 | 2.02 | 2.02 | 2.02 | 2.02 | 4.79 | 2.02 |
| K sorbate | 0.10 | 0.10 | - | 0.10 | 0.10 | 0.10 | 0.10 | 0.10 | - | 0.10 |
| Na benzoate | 0.10 | 0.10 | - | 0.10 | 0.10 | 0.10 | 0.10 | 0.10 | - | 0.10 |
| flavour blend[3] | 3.12 | 3.12 | 1.96 | 3.12 | 3.12 | 3.12 | 3.12 | 3.12 | 2.19 | 3.12 |
| vinegar | 11.50 | 11.50 | 16.17 | 11.50 | 11.50 | 11.50 | 11.50 | 11.00 | 16.17 | 11.50 |
| corn syrup | - | - | 9.16 | - | - | - | - | - | - | - |
| soybean oil | - | - | 29.69 | - | - | - | - | 1.50 | 29.69 | - |
| demin./water | 78.61 | 78.91 | 38.05 | 78.16 | 78.76 | 77.16 | 78.16 | 77.36 | 42.88 | 77.16 |

1) comparison examples within xanthan
2) high methoxy pectin
3) includes vegetable/spice pieces

EP 0 771 151 B1

<u>Table II - Example Attributes.</u>

| INGREDIENTS | Example Number | | | | | | | | | |
|---|---|---|---|---|---|---|---|---|---|---|
| ATTRIBUTES | A [1] | B [1] | C [1] | 1 | 2 | 3 | 4 | 5 | 6 | 7 |
| Brookfield (cps) | 3283 | 613 | 870 | 3650 | 367 | 3793 | 272 | 2480 | 371 | 3219 |
| Yield stress (Pa) | 9.4 | 0.5 | 0.9 | 5.9 | 0.6 | 4.6 | 0.3 | 4.8 | 0.7 | 3.6 |
| Titratable acid (%) % | 1.21 | 1.18 | 1.63 | 1.23 | 1.25 | 1.25 | 1.22 | 1.09 | 2.30* | 1.35 |
| | | | | | | | | | | |
| Particle Suspension [4] cf.xanthan comps. | 0 | - | - | 0 | 0 | 0 | 0 | 0 | + | 0 |
| Particle Suspension [4] cf.traditional comps. | + | 0 | 0 | + | + | + | + | + | + | + |
| | | | | | | | | | | |
| Surface Coating [4] cf.xanthan comps. | 0 | + | - | + | + | + | + | + | + | + |
| Surface Coating [4] cf.traditional comps. | - | - | 0 | + | + | + | + | + | + | + |
| | | | | | | | | | | |
| Dispersed Oil Stab. [4] cf.xanthan comps. | ▓ | ▓ | - | ▓ | ▓ | ▓ | ▓ | 0 | + | ▓ |
| Dispersed Oil Stab. [4] cf.traditional comps. | ▓ | ▓ | 0 | ▓ | ▓ | ▓ | ▓ | + | + | ▓ |
| | | | | | | | | | | |
| Mouthfeel [5] | - | - | + | + | + | + | + | + | + | + |

4) + improved performance          0 equivalent performance          - poorer performance          5) + not slimy          - slimy

**Claims**

1.  Pourable acidic dressing comprising

    a. 0-50 wt% of fat,
    b. 46-99 wt% of water,
    c. pieces of vegetables, herbs and/or spices of a visible size,
    d. an acidulant enough for a titratable acidity of 0.5-2.5%,
    e. 0.1-4 wt% of one or more non-starch polysaccharides present in a sheared gel form,
    which polysaccharides used either singly or in combination, if applied under quiescent gelling conditions, at the concentration used in the dressing composition, and at the appropriate pH, titratable acidity and salt content, are capable to form in water either

    (A) a rigid thermoreversible gel; or
    (B) a rigid chemically set gel; or
    (C) a rigid synergistic gel;
    where the dressing has
    a Brookfield viscosity of 100-4,500 cps. (centipoise) and
    a yield stress (tan delta = 1 ) of 0.1-10 Pa.

2.  Dressing according to claim 1, having a Brookfield viscosity of 200-2000 cps. and a yield stress (tan delta = 1 ) of 0.2-5 Pa.

3.  Dressing according to claims 1 or 2, having an titratable acidity of 0.9-1.8% and more preferably 1.1-1.4%.

4.  Dressing according to any one of claims 1-3, where the acidulant is vinegar or acetic acid.

5.  Dressing according to any one of claims 1-4, wherein the gel is selected from the group consisting of agar, calcium pectinate, calcium alginate, kappa-carrageenan and iota-carrageenan and the synergistic gels sodium alginate with high-methoxy pectin and konjac mannan with either agar or carrageenan.

6.  Dressing according to any one of claims 1-4, wherein the gel is a synergistic gel comprised of sodium alginate and high-methoxy pectin.

7.  Dressing according to any one of claims 1-6, which is substantially free of $Ca^{2+}$.

8.  Dressing according to any one of claims 1-7, which is substantially free of xanthan.

9.  Dressing according to any one of claims 1-8, wherein droplets of oil phase remain substantially dispersed for at least one hour.

10. Dressing according to any one of claims 1-9, where the pieces of vegetables, herbs and/or spices remain suspended for at least four weeks.

11. A process for preparing a pourable dressing comprising

    a. 0-50 wt% of fat,
    b. 46-99 wt% of water,
    c. pieces of vegetables, herbs and/or spices of a visible size,
    d. an acidulant, enough for a titratable acidity of 0.5-2.5%,
    e. 0.1-4 wt% of one or more non-starch polysaccharides present in a sheared gel form,
    which polysaccharides used either singly or in combination, if applied under quiescent gelling conditions, at the concentration used in the dressing composition, and at the appropriate pH, titratable acidity and salt content, are capable to form in water either

    (A) a rigid thermoreversible gel; or
    (B) a rigid chemically set gel; or
    (C) a rigid synergistic gel;

said process comprising the steps of

a. dispersing the polysaccharides in water to obtain a pre-mix, optionally adding one or more other ingredients, including the pieces of herbs, vegetables and spices to the dressing composition;
b. applying shear during the formation of the gel;
c. adding the remaining ingredients of the dressing to the sheared gel dispersion;
such that the final dressing has
a Brookfield viscosity of 100-4,500 cps. and
a yield stress ( tan delta = 1 ) of 0.1-10 Pa.

12. Process according to claim 11, wherein the pieces of herbs, vegetables and spices are added after formation of the sheared gel dispersion.

13. Process according to claims 11 or 12 whereby the dressing premix before shearing is subjected to a pasteurisation treatment.

**Patentansprüche**

1. Fließfähige saure Sauce, umfassend:

a. 0 bis 50 Gew.-% Fett,
b. 46 bis 99 Gew.-% Wasser,
c. Stückchen von Gemüsen, Kräutern und/oder Gewürzen einer sichtbaren Größe,
d. ein Säuerungsmittel, das für eine titrierbare Azidität von 0,5 bis 2,5% ausreicht,
e. 0,1 bis 4 Gew.-% eines oder mehrerer Nicht-Stärkepolysaccharide, die in einer einer Scherung unterworfenen Gelform vorliegen,
welche entweder einzeln oder in Kombination verwendeten Polysaccharide, bei Anwendung unter ruhenden Gelierbedingungen, bei der in der Saucenzusammensetzung verwendeten Konzentration und bei Eignung des pH-Werts, der titrierbaren Azidität und des Salzgehalts, in der Lage sind, in Wasser entweder:

(A) ein starres, thermoreversibles Gel oder
(B) ein starres, chemisch gehärtetes Gel oder
(C) ein starres, synergistisches Gel
zu bilden, wobei die Sauce
eine Brookfield-Viskosität von 100 bis 4.500 cps (Centipoise) und
eine Fließspannung ( tan delta = 1 ) von 0,1 bis 10 Pa aufweist.

2. Sauce nach Anspruch 1 mit einer Brookfield-Viskosität von 200 bis 2000 cps und einer Fließspannung ( tan delta = 1 ) von 0,2 bis 5 Pa.

3. Sauce nach den Ansprüchen 1 oder 2 mit einer titrierbaren Azidität von 0,9 bis 1,8% und insbesondere 1,1 bis 1,4%.

4. Sauce nach irgendeinem der Ansprüche 1 bis 3, worin das Säuerungsmittel Essig oder Essigsäure ist.

5. Sauce nach irgendeinem der Ansprüche 1 bis 4, worin das Gel aus der aus Agar, Calciumpektinat, Calciumalginat, kappa-Carrageenan und jota-Carrageenan und den synergistischen Gelen von Natriumalginat mit Pektin mit hohem Methoxygehalt und Konjac Mannan mit entweder Agar oder Carrageenan bestehenden Gruppe ausgewählt ist.

6. Sauce nach irgendeinem der Ansprüche 1 bis 4, worin das Gel ein synergistisches Gel, umfassend Natriumalginat und Pektin mit hohem Methoxygehalt, ist.

7. Sauce nach irgendeinem der Ansprüche 1 bis 6, das von $Ca^{2+}$ im wesentlichen frei ist.

8. Sauce nach irgendeinem der Ansprüche 1 bis 7, das von Xanthan im wesentlichen frei ist.

9. Sauce nach irgendeinem der Ansprüche 1 bis 8, worin Tröpfchen der Ölphase mindestens 1 Stunde lang im wesentlichen dispergiert bleiben.

10. Sauce nach irgendeinem der Ansprüche 1 bis 9, worin die Stückchen von Gemüsen, Kräutern und/oder Gewürzen mindestens 4 Wochen lang suspendiert bleiben.

11. Verfahren zur Herstellung einer fließfähigen Sauce, umfassend:

    a. 0 bis 50 Gew.-% Fett,
    b. 46 bis 99 Gew.-% Wasser,
    c. Stückchen von Gemüsen, Kräutern und/oder Gewürzen einer sichtbaren Größe,
    d. ein Säuerungsmittel, das für eine titrierbare Azidität von 0,5 bis 2,5% ausreicht,
    e. 0,1 bis 4 Gew.-% eines oder mehrerer Nicht-Stärkepolysaccharide, die in einer einer Scherung unterworfenen Gelform vorliegen,
    welche entweder einzeln oder in Kombination verwendeten Polysacchariden, bei Anwendung unter ruhenden Gelierbedingungen, bei der in der Saucenzusammensetzung verwendeten Konzentration und bei Eignung des pH-Werts, der titrierbaren Azidität und des Salzgehalts, in der Lage sind, in Wasser entweder:

    (A) ein starres, thermoreversibles Gel oder
    (B) ein starres, chemisch gehärtetes Gel oder
    (C) ein starres, synergistisches Gel
    zu bilden, wobei das Verfahren die Schritte umfaßt:

    a. Dispergieren der Polysaccharide in Wasser zur Erzielung einer Vormischung, fakultatives Zugeben eines oder mehrerer anderer Bestandteile, einschließlich der Stückchen von Kräutern, Gemüsen oder Gewürzen, zu der Saucenzusammensetzung;
    b. Anlegen von Scherung während der Bildung des Gels;
    c. Zugeben der restlichen Bestandteile der Sauce zu der gescherten Geldispersion,
    so daß die endgültige Sauce aufweist:
    eine Brookfield-Viskosität von 100 bis 4.500 cps und
    eine Fließspannung (tan delta = 1) von 0,1 bis 10 Pa.

12. Verfahren nach Anspruch 11, bei welchem die Stückchen von Kräutern, Gemüsen und Gewürzen nach Bildung der gescherten Geldispersion zugefügt werden.

13. Verfahren nach den Ansprüchen 11 oder 12, wobei die Saucenvormischung vor dem Scheren einer Pasteurisierungsbehandlung unterworfen wird.

## Revendications

1. Sauce salade acide fluide comprenant :

    a. de 0 à 50 % en masse de matière grasse ;
    b. de 46 à 99 % en masse d'eau ;
    c. des morceaux de légumes, de plantes aromatiques et/ou d'épices ayant une taille visible ;
    d. un agent d'acidité suffisant pour donner une acidité titrable de 0,5 - 2,5 % ;
    e. de 0,1 à 4 % en masse d'un ou de plusieurs polysaccharides non amidon présents sous la forme de gel ayant subi un cisaillement, lesdits polysaccharides qui sont utilisés soit seuls soit en combinaison, si ils sont appliqués dans des conditions de gélification calme, à la concentration utilisée dans la composition de sauce salade et au pH, à l'acidité titrable et à la teneur en sel appropriée, sont capables de former dans l'eau, soit :

    (A) un gel thermoréversible ; ou
    (B) un gel rigide à prise chimique ; ou
    (C) un gel rigide synergistique.
    dans laquelle la sauce salade a
    une viscosité Brookfield de 100 - 4.500 centipoises et
    une limite d'élasticité (tangente delta = 1) de 0,1 - 10 Pa.

2. Sauce salade selon la revendication 1, caractérisée en ce qu'elle a une viscosité Brookfield de 200 - 2000 centipoises et une limite d'élasticité (tangente delta = 1) de 0,2 - 5 Pa.

3. Sauce salade selon la revendication 1 ou 2, caractérisée en qu'elle a une acidité titrable de 0,9 - 1,8 %, et de façon plus préférentielle de 1,1 - 1,4 %.

4. Sauce salade selon l'une des revendications 1 à 3, caractérisée en ce que l'acidifiant est du vinaigre ou de l'acide acétique.

5. Sauce salade selon l'une des revendications 1 à 4, caractérisée en ce que le gel est sélectionné à partir du groupe composé de l'Agar, du pectinate de calcium, de l'alginate de calcium, du kappa-carragheenane et du iota-carragheenane et des gels synergistiques d'alginate de sodium avec de la pectine hautement méthoxy et de mannane de konjac soit avec de l'Agar, soit avec du carragheenane.

6. Sauce salade selon l'une des revendications 1 à 4, caractérisée en ce que le gel est un gel synergistique composé d'alginate de sodium et de pectine hautement méthoxy.

7. Sauce salade selon l'une des revendications 1 à 6, ne contenant substantiellement pas de $Ca^{2+}$.

8. Sauce salade selon l'une des revendications 1 à 7, ne contenant substantiellement pas de xanthane.

9. Sauce salade selon l'une des revendications 1 à 8, caractérisée en ce que les gouttelettes de la phase d'huile demeurent substantiellement dispersées pendant au moins une heure.

10. Sauce salade selon l'une des revendication 1 à 9, caractérisée en ce que les morceaux de légumes, de plantes aromatiques et/ou d'épices demeurent en suspension pendant au moins quatre semaines.

11. Un procédé de préparation d'un sauce salade fluide comprenant :

   a. de 0 à 50 % en masse de matière grasse ;
   b. de 46 à 99 % en masse d'eau ;
   c. des morceaux de légumes, de plantes aromatiques et/ou d'épices ayant une taille visible ;
   d. un agent d'acidité suffisant pour donner une acidité titrable de 0,5 - 2,5 % ;
   e. de 0,1 à 4 % en masse d'un ou de plusieurs polysaccharides non amidon présents sous la forme de gel ayant subi un cisaillement, lesdits polysaccharides qui sont utilisés soit seuls soit en combinaison, si ils sont appliqués dans des conditions de gélification calme, à la concentration utilisée dans la composition de sauce salade et au pH, à l'acidité titrable et à la teneur en sel appropriée, sont capables de former dans l'eau, soit :

   (A) un gel thermoréversible ; ou
   (B) un gel rigide à prise chimique ; ou
   (C) un gel rigide synergistique ;

   ledit procédé comprenant les étapes consistant à :

   a. disperser les polysaccharides dans de l'eau afin d'obtenir un prémélange, en ajoutant de façon optionnelle un ou plusieurs autres ingrédients, ce qui comprend les morceaux de plantes aromatiques, de légumes et d'épices à la composition de sauce salade ;
   b. appliquer un cisaillement pendant la formation du gel ;
   c. ajouter les autres ingrédients de la sauce salade à la dispersion de gel ayant subi un cisaillement ;

   de telle sorte que la sauce salade finale a :
   une viscosité Brookfield de 100 - 4.500 centipoises et
   une limite élastique (tangente delta = 1) de 0,1 - 10 Pa.

12. Procédé selon la revendication 11, caractérisé en ce que les morceaux de plantes aromatiques, de légumes et d'épices sont ajoutés après la formation de la dispersion de gel ayant subi un cisaillement.

13. Procédé selon la revendication 11 ou 12, caractérisé en ce que le pré-mélange de sauce salade est soumis à un traitement de pasteurisation avant le cisaillement.